# FASCICULE DE BREVET EUROPEEN

(11) **EP 1 028 996 B1**
(45) Date de publication et mention de la délivrance du brevet: **18.08.2004**
(21) Numéro de dépôt: 98965154.2
(22) Date de dépôt: 06.11.1998
(51) Int. Cl.: C08K 5/00, C08K 5/098, B60C 1/00, C08L 21/00

(54) **PRODUIT A BASE DE CAOUTCHOUC, SON PROCEDE D'OBTENTION ET PROCEDE POUR REDUIRE LA RESISTANCE AU ROULEMENT D'UN PNEUMATIQUE CONSTITUE DUDIT PRODUIT**
PRODUKT AUF BASIS VON KAUTSCHUK, VERFAHREN ZU SEINER HERSTELLUNG UND VERFAHREN ZUR VERRINGERUNG DES ROLLWIDERSTANDES VON REIFEN AUS DIESEM PRODUKT
RUBBER BASED PRODUCT, METHOD FOR OBTAINING SAME AND METHOD FOR REDUCING ROLLING RESISTANCE OF A TYRE MADE OF SAID PRODUCT

(30) Priorité: 10.11.1997 FR 9714210
(43) Date de publication de la demande: 23.08.2000
(73) Titulaire: COMPAGNIE GENERALE DES ETABLISSEMENTS MICHELIN-MICHELIN & CIE, 63040 Clermont-Ferrand Cédex (FR)
(72) Inventeur: MASSON, François, F-63000 Clermont-Ferrand (FR); RENAULT, Francis, F-63100 Clermont-Ferrand (FR)
(74) Mandataire: Hiebel, Robert
(86) Numéro de dépôt international: PCT/EP1998/007111
(87) Numéro de publication internationale: WO 1999/024502

(56) Documents cités:
- EP-A- 0 507 207
- CHEMICAL ABSTRACTS, vol. 107, no. 20, 16 novembre 1987 Columbus, Ohio, US; abstract no. 177749, SATORU ET AL.: "Effect of metaL complexes on adhesion of rubber and brass" XP002098984 & NIPPON SETCHAKU KYOKAISHI, vol. 23, no. 7, 1987, pages 265-270,
- CHEMICAL ABSTRACTS, vol. 82, no. 8, 24 février 1975 Columbus, Ohio, US; abstract no. 44700, XP002098983 & JP 49 004300 B (SUMITOMO CHEMICAL) 31 janvier 1974

## Description

La présente invention concerne un produit à base de caoutchouc, son procédé d'obtention et un procédé pour réduire la résistance au roulement d'un pneumatique constitué dudit produit.

Une des préoccupations principales des manufacturiers de pneumatiques est d'augmenter la durée de vie de ceux-ci. En particulier il importe d'améliorer l'endurance, vis-à-vis des processus oxydants, des compositions de caoutchouc, des renforts métalliques ou textiles et des interfaces entre ces mélanges et ces renforts.

Un procédé connu pour réduire ces phénomènes d'oxydation consiste à limiter la quantité d'oxygène qui arrive dans une zone de l'enveloppe particulièrement sensible à l'oxydation, en provenance de l'air de gonflage ou de l'air extérieur. C'est ainsi que l'on utilise depuis très longtemps une couche de caoutchouc butyl, imperméable à l'oxygène, contre la paroi interne des enveloppes. Malheureusement, l'imperméabilité du caoutchouc butyl n'est pas totale et le flux d'oxygène, même réduit, qui passe dans la masse de l'enveloppe produit à la longue les phénomènes d'oxydation que l'on voulait éviter.

D'autres matériaux encore plus étanches que le caoutchouc butyl ont été proposés dans ce but, comme décrit par exemple dans les documents US-A-5 236 030, US-A-4 874 670, US-A-5 036 113, EP-A-337 279, US-A-5 040 583 et US-A-5 156 921. Cependant ces matériaux sont coûteux et leur mise en oeuvre dans les enveloppes pose de multiples problèmes.

Un autre procédé pour éviter les problèmes d'oxydation consiste à piéger chimiquement l'oxygène par thermo-oxydation accélérée d'une composition de caoutchouc servant de tampon, disposée entre une source principale d'oxygène et la zone que l'on veut protéger contre les phénomènes d'oxydation. A titre d'exemple, une telle composition tampon peut être localisée entre la face interne de l'enveloppe, éventuellement revêtue de caoutchouc butyl, et la nappe carcasse pour diminuer la quantité d'oxygène qui arrive au contact de cette nappe en provenance de l'air de gonflage, en particulier dans les enveloppes destinées à être montées sur des véhicules poids lourds. Pour accélérer la fixation de l'oxygène, il est connu d'utiliser dans ces compositions tampon un sel métallique qui catalyse l'oxydation, en particulier un sel de cobalt. Ce sel a pour effet d'activer la décomposition homolytique des hydroperoxydes générés lors du vieillissement provoqué par les phénomènes d'oxydation précités. Ce sel est introduit de préférence dans une quantité de 0,2 à 0,3 partie en poids en équivalent cobalt pour 100 parties en poids de l'élastomère dans la composition tampon. On augmente ainsi de 50 à 100 % environ la quantité d'oxygène qui peut être piégée par cette composition tampon, par rapport à la même composition dépourvue de sel de cobalt. Malheureusement, l'expérience montre que cette amélioration du comportement vis-à-vis de l'oxydation s'accompagne d'une augmentation importante des pertes hystérétiques de la composition tampon par suite de la quantité notable de sel de cobalt introduite. Cette augmentation des pertes hystérétiques conduit d'une part à un auto-échauffement de la composition, d'où une durée de vie diminuée, ce qui est en opposition avec le but recherché, et à une augmentation de la résistance au roulement, ce qui est également à éviter car le but des manufacturiers est de limiter autant que possible la résistance au roulement pour diminuer la consommation de carburant.

Pour ces raisons, l'utilisation de compositions tampons, aussi séduisante soit elle, n'a pas eu le développement que l'on attendait.

Le document de brevet européen EP-A-507 207 décrit une méthode pour piéger de l'oxygène au moyen d'une composition tampon élastomérique, laquelle est contenue dans une couche d'un emballage. Cette composition tampon est notamment caractérisée par la présence d'un sel de métal de transition prévu pour activer la fixation d'oxygène. Comme exposé ci-dessus, les sels métalliques qui sont décrits à titre préférentiel sont des sels de cobalt. A titre subsidiaire, d'autres métaux tels que le manganèse, voire le fer sont également envisagés, mais pas en relation avec des sels spécifiés.

La demanderesse a trouvé de façon inattendue que les inconvénients précités pouvaient être fortement réduits en utilisant des sels de fer spécifiques au lieu de sels de cobalt dans ces compositions tampons, ceci pour l'obtention d'un produit à base de caoutchouc, du type comportant au moins une zone tampon prévue pour piéger l'oxygène extérieur audit produit en vue de protéger de l'oxydation au moins une zone sensible dudit produit, ladite ou chaque zone tampon contenant une composition à base d'au moins un élastomère qui comprend au moins un sel de fer (III) prévu pour activer l'oxydation dans ladite composition.

Plus précisément, un produit selon l'invention est tel que ledit sel appartient au groupe constitué par l'acétylacétonate de fer (III) et par les sels de fer (III) d'acides carboxyliques répondant à la formule:
Fe(CₙH₂ₙO₂)₃ où n est compris entre 6 et 23.

Ledit sel est alors préférentiellement l'acétylacétonate de fer (III), l'hexanoate de fer (III), le 2-éthylhexanoate de fer (III), ou le laurate de fer (III).

A titre de sels de fer (III) répondant à la formule, on peut par exemple citer les sels des acides carboxyliques suivants: hexanoïque, 2-éthylhexanoïque, laurique, tridécanoique, myristique, pentadécanoique, palmitique, heptadécanoique, stéarique, nonadécanoique, eicosanoique, heneicosanoique, docosanoique et tricosanoique.

Selon un mode de réalisation de l'invention, ledit sel appartient au groupe constitué par l'acétylacétonate de fer (III) et par les sels de fer (III) d'acides gras de formule:
Fe(CₙH₂ₙO₂)₃ où n est compris entre 13 et 23.

Ledit sel est alors préférentiellement le stéarate de fer (III) ou le palmitate de fer (III).

De préférence, la quantité d'un sel de fer (III) selon l'invention dans la composition va de 0,01 à 0,02 pce d'équivalent fer, l'abréviation "pce" signifiant partie en poids pour 100 parties en poids de l'élastomère ou de l'ensemble des élastomères présents dans la composition.

La composition conforme à l'invention est à base de caoutchouc naturel ou synthétique, ou d'un coupage de deux ou plusieurs de ces caoutchoucs. Des exemples de caoutchoucs synthétiques susceptibles d'être mis en oeuvre dans la composition conforme à l'invention sont les caoutchoucs diéniques tels que le polyisoprène, le polybutadiène, les caoutchoucs mono-oléfiniques tels que le polychloroprène, le polyisobutylène, les copolymères styrène-butadiène ou styrène-butadiène-isoprène, les copolymères acrylonitrile-butadiène-styrène et les terpolymères éthylène-propylène-diène. Parmi les caoutchoucs synthétiques, les caoutchoucs diéniques sont préférés, en particulier tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinylaromatique ayant de 8 à 20 atomes de carbone.

A titre de diènes conjugués, conviennent notamment le butadiène-1,3, le méthyl-2 butadiène-1,3, les 2,3-di(alcoyle en C1 à C5) butadiène-1,3 tels que par exemple le diméthyl-2,3, diéthyl-2,3 butadiène-1,3, méthyl-2 éthyl-3 butadiéne-1,3, le méthyl-2 isopropyl-3 butadiène-1,3, le phényl butadiène-1,3, le pentadiène-1,3, l'hexadiène-2,4, etc.

A titre de composés vinylaromatiques conviennent notamment le styrène, l'ortho, méta, para-méthylstyrène, le mélange commercial "vinyle-toluène", le para-tertiobutyl styrène, les méthoxystyrènes, les chlorostyrènes, le vinylmésitylène, le divinyl benzène, le vinylnaphtalène, etc.

Les copolymères peuvent contenir par exemple entre 99 % et 20 % en poids d'unités diéniques et de 1 % à 80 % en poids d'unités vinyle aromatiques.

Les polymères peuvent avoir toute microstructure qui est fonction des conditions de polymérisation utilisées, notamment de la présence ou non d'un agent modifiant et/ou randomisant et des quantités d'agent modifiant ou randomisant employées. Les polymères peuvent être à blocs, statistiques, séquencés, microséquencés, etc. et préparés en dispersion ou en solution.

A titre préférentiel de caoutchoucs synthétiques diéniques conviennent les polybutadiènes et en particulier ceux ayant une teneur en unités -1,2 comprise entre 4 % et 80 % et ceux ayant plus de 90 % de liaisons cis-1,4, les polyisoprènes, les copolymères de butadiène-styrène et en particulier ceux ayant une teneur en styrène comprise entre 5 % et 50 % en poids et plus particulièrement entre 20 % et 40 % en poids, une teneur en liaisons -1,2 de la partie butadiénique comprise entre 4 % et 65 %, une teneur en liaisons trans-1,4 comprise entre 30 % et 80 %, ceux ayant une teneur globale en composé aromatique comprise entre 5 % et 50 % et une température de transition vitreuse (Tg) comprise entre 0 °C et - 80 °C et particulièrement ceux ayant une teneur en styrène comprise entre 25 % et 30 % en poids, une teneur en liaisons vinyliques de la partie butadiénique comprise entre 55 % et 65 %, une teneur en liaisons trans-1,4 comprise entre 20 % et 25 % et une température de transition vitreuse comprise entre - 20 °C et - 30 °C.

Dans le cas de copolymères de butadiène-styrène-isoprène conviennent ceux ayant une teneur en styrène comprise entre 5 % et 50 % et plus particulièrement comprise entre 10 % et 40 %, une teneur en isoprène comprise entre 15 % et 60 % en poids et plus particulièrement comprise entre 20 % et 50 % en poids, une teneur en butadiène comprise entre 5 % et 50 % et plus particulièrement comprise entre 20 % et 40 % en poids, une teneur en unités -1,2 de la partie butadiénique comprise entre 4 % et 85 %, une teneur en unités trans-1,4 de la partie butadiénique comprise entre 6 % et 80 %, une teneur en unités -1,2 plus -3,4 de la partie isoprénique comprise entre 5 % et 70 % et une teneur en unités trans-1,4 de la partie isoprénique comprise entre 10 % et 50 %.

Les caoutchoucs synthétiques peuvent être couplés et/ou étoilés ou encore fonctionnalisés avec un agent de couplage et/ou d'étoilage ou de fonctionnalisation.

Ces caoutchoucs peuvent être vulcanisés et/ou réticulés par tous les agents connus tels que le soufre, les peroxydes, les bismaléïmides, etc.

La composition conforme à l'invention comporte les charges et additifs habituels comme par exemple du noir de carbone, de la silice, de l'acide stéarique, des résines renforçantes, de l'acide silicique, de l'oxyde de zinc, des activateurs, des pigments, des accélérateurs ou des retardateurs de vulcanisation, des agents contre le vieillissement, des agents antiréversion, des agents antioxydants, des huiles ou divers agents de mise en oeuvre, des résines tackifiantes, des promoteurs d'adhésion sur métal, des cires anti-ozonantes, des agents de liaison et/ou de recouvrement de la silice, etc.

Les compositions conformes à l'invention peuvent être utilisées dans des applications très diverses, et pour de nombreux produits caoutchouteux notamment, par exemple dans les enveloppes de pneumatiques, comme compositions tampons entre une source d'oxygène, notamment l'air de gonflage ou l'air extérieur, et une zone à protéger dans l'enveloppe. A titre d'exemple, ces compositions peuvent être utilisées à l'intérieur de la gomme intérieure, entre la gomme intérieure et la nappe carcasse, entre la nappe carcasse et les nappes sommet, entre les nappes sommet et la bande de roulement, entre la nappe carcasse et le flanc, voire à l'extérieur du flanc.

L'utilisation du composé de fer conforme à l'invention est très différente des utilisations connues de composés de fer dans l'industrie des caoutchoucs, comme par exemple l'utilisation connue de sels oxydants pour favoriser la mastication des caoutchoucs (propriétés peptisantes) ou la dévulcanisation pour recyclage, ces applications étant par exemple décrites dans les documents US-A-3 324 100, EP-A-157 079 et RU-A-2 014 339.

Concernant le procédé d'obtention d'un produit à base de caoutchouc selon la présente invention, il consiste à incorporer par travail mécanique ledit sel de fer (III) à l'élastomère ou aux élastomères que comprend la composition tampon, pour l'obtention de la zone tampon correspondante.

Selon une autre caractéristique de ce procédé, il consiste à incorporer audit ou auxdits élastomères ledit sel de fer (III) en même temps qu'une charge prévue pour renforcer ladite composition.

Concernant le procédé selon la présente invention pour réduire la résistance au roulement d'une enveloppe de pneumatique, il consiste à incorporer par travail mécanique, à un ou à des élastomères constituant ladite enveloppe, un sel de fer (III) tel que défini ci-dessus.

L'invention sera aisément comprise à l'aide des exemples non limitatifs qui suivent.

Ces exemples sont soit des exemples conformes à l'invention, soit des exemples non conformes à l'invention utilisant des compositions sans composé métallique ou avec des sels de cobalt ou des composés de fer non compris dans le groupe sélectionné dans le cadre de l'invention.

L'efficacité pro-oxydante des composés de fer ou de cobalt est évaluée en faisant subir aux compositions un vieillissement thermo-oxydant. On mesure ensuite la prise d'oxygène par analyse élémentaire et on détermine l'évolution des propriétés mécaniques comme le module, la perte hystérétique et les propriétés de rupture.

Les tests sont réalisés dans les conditions suivantes.

### Vulcanisation

Sauf indication différente, tous les essais sont réalisés sur des échantillons vulcanisés par cuisson de 10 minutes à 150°C.

### Vieillissement thermo-oxydant

On utilise une étuve ventilée aux températures de 65 °C et 85 °C. Ces températures sont considérées comme représentatives des régimes thermiques lors du fonctionnement d'enveloppes de pneumatiques.

### Perte hystérétique

La mesure de perte hystérétique, ou hystérèse, (Ph) est une perte d'énergie à 60 °C par rebond à énergie imposée mesurée au sixième choc. La valeur, exprimée en %, est la différence entre l'énergie fournie et l'énergie restituée, rapportée à l'énergie fournie. La déformation pour les pertes mesurées est de 40 %.

### Essais de traction

On mesure les modules d'allongement à 10 % d'allongement (M10) et 100 % d'allongement (M100) conformément à la norme ISO 37.

### Indices de cassage Scott

On mesure également les contraintes à la rupture (Cr) en MPa et les allongements à la rupture (Ar) en %. Toutes ces mesures de traction sont effectuées dans les conditions normales de température et d'hygrométrie selon la norme ISO 37.

### Les exemples

Dans les exemples qui suivent on utilise la composition de base suivante qui est réalisée comme connue en soi dans un mélangeur interne puis sur un mélangeur externe, tous les chiffres indiqués étant des parties en poids et étant précisé que le sel de fer (III) est introduit au mélangeur interne, par exemple un Banburry, en même temps que le noir, ZnO, l'acide stéarique et la 6PPD.

| | |
|---|---|
| Caoutchouc naturel | 100 |
| Noir de carbone N326 | 47 |
| Soufre | 4,5 |
| DCBS | 0,8 |
| ZnO | 7,5 |
| Acide stéarique | 0,9 |
| 6PPD | 1,5 |

- DCBS :: N,N-dicyclohexyl-2-benzothiazolesulfénamide
- 6PPD :: N-1,3-diméthylbutyl-N'-phényl-paraphénylènediamine.

A partir de cette composition de base on prépare les compositions suivantes.

Compositions témoins :
◇ Composition T1 : composition de base sans dérivé métallique
◇ Composition T2 : composition de base comportant en outre 0,25 pce, en équivalent cobalt, de naphténate de cobalt.
◇ Composition T3 : composition de base comportant en outre 0,25 pce, en équivalent fer, de fumarate de fer (III).
◇ Composition T4 : composition de base comportant en outre 0,25 pce, en équivalent fer, de gluconate de fer (III).
◇ Composition T5 : composition de base comportant en outre 0,25 pce, en équivalent fer, de citrate de fer (III).

Compositions conforme à l'invention :
◇ Composition I1 : composition de base comportant en outre 0,02 pce, en équivalent de fer, d'acétylacétonate ferrique
◇ Composition I2 : composition de base comportant en outre 0,01 pce, en équivalent fer, de stéarate ferrique.
◇ Composition I3 : composition de base comportant en outre 0,02 pce, en équivalent de fer, de 2-éthylhexanoate ferrique.
◇ Composition I4 : composition de base comportant en outre 0,02 pce, en équivalent de fer, de laurate ferrique.
◇ Composition I5 : composition de base comportant en outre 0,02 pce, en équivalent de fer, de palmitate ferrique.

Composition I6 : composition de base comportant en outre 0,02 pce, en équivalent de fer, d'hexanoate ferrique.

### Exemple 1

On détermine avec ces compositions les modules d'allongement M10 et M100 ainsi que les pertes hystérétiques (ou hystérèse). Les résultats sont donnés dans le tableau 1 qui suit.

**Tableau 1**

| | T1 | T2 | I1 | I2 | I3 | I4 | I5 | I6 |
|---|---|---|---|---|---|---|---|---|
| M10 (MPa) | 5,1 | 6,0 | 5,0 | 4,9 | 4,2 | 4,3 | 4,4 | 4,5 |
| M100 (MPa) | 4,6 | 4,7 | 4,4 | 4,4 | 4,2 | 4,3 | 4,3 | 4,5 |
| Ph (%) | 16,5 | 20,0 | 16,0 | 17,0 | 16,2 | 16 | 15,7 | 15 |

Ce tableau montre que le sel de fer, dans les compositions conformes à l'invention, modifie moins les caractéristiques de la composition de base que ne le fait le composé de cobalt, et que la perte hystérétique est notablement plus élevée pour la composition témoin T2 comportant le composé de cobalt.

### Exemple 2

Cet exemple a pour but de montrer l'aptitude des compositions I1, I2, I3, I4, I5, I6 conformes à l'invention à fixer de l'oxygène, après une durée de thermo-oxydation de 10 semaines à 65°C ou de 2 semaines à 85°C, en les comparant aux compositions témoins T1 et T2.

Les résultats de ces essais de thermo-oxydation figurent dans le tableau 2 suivant qui donne le % en poids d'oxygène fixé pour chaque température de thermo-oxydation.

**Tableau 2**

| | T1 | T2 | I1 | I2 | I3 | I4 | I5 | I6 |
|---|---|---|---|---|---|---|---|---|
| A 65°C | 0,75 | 1,3 | 1,6 | 1,1 | 0,9 | 0,8 | 0,8 | 0,9 |
| A 85°C | 1,25 | 2,05 | 2,2 | 1,9 | 1,9 | 1,7 | 1,8 | 1,7 |

Le tableau 2 montre que l'invention permet une fixation d'oxygène semblable à celle obtenue avec la composition connue au cobalt (T2), cette fixation étant notablement plus importante qu'avec la composition témoin dépourvue de composé de fer ou de cobalt (T1).

Des compositions de base comportant d'autres sels métalliques décrits comme pro-oxydants dans la littérature introduits en quantité telle que l'on est à isomole de métal par rapport à la composition témoin T2, tels que les sels de manganèse II ou III et notamment le carbonate, l'acétate, l'acétylacétonate de manganèse (II), l'acétylacétonate de manganèse (III), les sels de molybdène (IV) et notamment le sulfure et l'oxyde de molybdène (IV), les sels de cuivre (II) et notamment l'hydroxyde, le carbonate, le stéarate, l'acétate, l'acétyl acétonate de cuivre (II), les sels de chrome (III) et notamment l'acétylacétonate de chrome, le sulfate de cérium (IV), conduisent à des résultats similaires à ceux obtenus avec la composition témoin T1 qui est dépourvue de sel métallique, c'est-à-dire des pourcentages en poids d'oxygène fixé allant de 1,0 à 1,3 à 85 °C.

### Exemple 3

Le but de cet exemple est d'étudier les modules et les propriétés à la rupture, ainsi que l'hystérèse des compositions I1, I3, I4, I5, I6 conformes à l'invention en comparaison de la composition témoin T2 comportant le composé de cobalt, après les traitements de thermo-oxydation précédemment décrits dans l'exemple 2.

Les résultats sont donnés dans les tableaux 3 et 4 suivants qui montrent, pour chaque composition, l'évolution des valeurs des différents paramètres par rapport à celles de la même composition avant traitement thermo-oxydant. Le tableau 3 donne l'évolution pour le traitement à 65°C et le tableau 4 donne cette évolution pour le traitement à 85°C.

**Tableau 3**

| | T2 | I1 | I3 | I4 | I5 | I6 |
|---|---|---|---|---|---|---|
| M10 | +60% | +50% | +65% | +62% | +58% | +58% |
| M100 | + 100% | +110% | +125% | +110% | +110% | +106% |
| Ph | +7 | + 6 | +3,2 | +3,6 | +3,7 | +3,5 |
| Ar | -65% | -70% | -64% | -66 % | -61 % | -55 % |
| Cr | -55% | -60% | -47 % | -52 % | -46 % | -41 % |

**Tableau 4**

| | T2 | I1 | I3 | I4 | I5 | I6 |
|---|---|---|---|---|---|---|
| M10 | +70% | +95% | +62% | +46 % | +53 % | +54% |
| M100- | - | - | - | - | - | - |
| Ph | +10 | +8 | +5,9 | +4,1 | +6,1 | +7,1 |
| Ar | -85% | -90% | -84% | -82% | -82% | -80% |
| Cr | -80% | -85% | -79% | -76% | -77% | -73% |

Ces tableaux montrent que l'évolution est en général du même ordre de grandeur pour la composition conforme à l'invention (I1) et pour la composition connue (T2) mais que la perte hystérétique des compositions I1, I3, I4, I5, I6 selon l'invention est toujours améliorée par rapport à celle du témoin T2.

### Exemple 4

Cet exemple est le même que l'exemple 3, à la différence que l'on utilise la composition de l'invention I2 au lieu de la composition I1. Les résultats sont donnés dans les tableaux 5 (traitement à 65°C) et 6 (traitement à 85°C).

**Tableau 5**

| | T2 | I2 |
|---|---|---|
| M10 | +50% | + 60% |
| M100 | +90% | +100% |
| Ph | +8 | +5 |
| Ar | -70% | -60% |
| Cr | -60% | -40% |

**Tableau 6**

| | T2 | I2 |
|---|---|---|
| M10 | +65% | +60% |
| M100 | Valeurs non mesurables | |
| Ph | +10 | +7 |
| Ar | - 85 % | - 85 % |
| Cr | - 80% | - 80 % |

Les conclusions que l'on peut tirer de cet exemple sont les mêmes que pour l'exemple 3, concernant la composition 12.

### Exemple 5

Le but de cet exemple est d'étudier la quantité d'oxygène fixé dans des compositions non conformes à l'invention contenant des composés du fer.

On effectue des essais de fixation d'oxygène dans les mêmes conditions qu'à l'exemple 2 sur les compositions témoins T1 à T5. Les résultats sont donnés dans le tableau 7 qui suit dont la présentation est analogue à celle du tableau 2.

**Tableau 7**

| | T1 | T2 | T3 | T4 | T5 |
|---|---|---|---|---|---|
| A 65 °C | 0,7 | 1,3 | 0,8 | 0,8 | 0,8 |
| A 85 °C | 1,0 | 1,8 | 1,0 | 1,0 | 1,0 |

On constate donc que les compositions témoins T3 à T5, qui comportent des composés du fer non conformes à l'invention, ont une aptitude à fixer l'oxygène qui est inférieure à celle de la composition témoin T2 comportant un dérivé de cobalt et de même niveau que l'aptitude de la composition T1 sans sel métallique.

### Exemple 6

Le but de cet exemple comparatif est de montrer l'intérêt d'utiliser la composition conforme à l'invention dans une enveloppe de pneumatique.

On réalise des enveloppes de pneumatiques pour véhicule poids lourd, de dimension 315/80 R 22,5, identiques, comportant, de façon connue, de l'intérieur vers l'extérieur :
◇ une couche de caoutchouc qui limite la cavité interne de l'enveloppe destinée à contenir l'air sous pression, cette couche étant peu perméable à l'air pour limiter la sortie d'air vers le reste de l'enveloppe, cette couche étant appelée "gomme intérieure";
◇ une composition tampon de caoutchouc destinée à piéger l'oxygène provenant de la cavité interne;
◇ une nappe carcasse;
◇ une armature de sommet;
◇ une bande de roulement.

On utilise pour cette composition tampon la formulation de base des exemples précédents si ce n'est qu'on utilise du noir de carbone N772 à la place du noir N326. Elle est ensuite vulcanisée.

A partir de cette composition de base, on réalise les compositions suivantes :
◇ Composition témoin T6 : composition de base comportant en outre 0,25 pce, en équivalent cobalt, de naphténate de cobalt ;
◇ Composition conforme à l'invention I3 : composition de base comportant en outre 0,02 pce, en équivalent fer, d'acétylacétonate ferrique.

On vulcanise ces compositions comme connu en soi et on détermine les modules d'allongement M10, M100 et les pertes hystérétiques des 2 compositions.

Les résultats sont donnés dans le tableau 8.

**Tableau 8**

| | T6 | I3 |
|---|---|---|
| M10 (MPa) | 3,75 | 3,72 |
| M100 (MPa) | 3,60 | 3,74 |
| Ph (%) | 9,5 | 6,0 |

Comme indiqué précédemment, l'invention permet de diminuer notablement les pertes hystérétiques.

On réalise trois enveloppes témoin comportant la composition T6 et trois enveloppes conformes à l'invention comportant la composition I3 et on évalue la résistance au roulement de toutes ces enveloppes en les soumettant au test décrit dans la norme ISO 9948. Les résultats suivants (exprimés en kg/tonne) sont les moyennes des trois mesures pour chaque catégorie d'enveloppes :

| Enveloppes avec T6 | Enveloppes avec I3 |
|---|---|
| 5,15 | 5,07 |

On constate donc que la composition 13 conforme à l'invention permet de diminuer notablement la résistance au roulement des enveloppes.

En résumé l'invention permet :
◇ de diminuer considérablement la teneur en métal dans la composition de caoutchouc, tout en conservant sensiblement les mêmes caractéristiques de fixation d'oxygène ;
◇ de diminuer notablement les pertes hystérétiques des compositions de caoutchouc se traduisant notamment par la diminution de la résistance au roulement des pneumatiques et une endurance améliorée.

Bien entendu, l'invention n'est pas limitée aux exemples précédemment décrits.

## Revendications

1. Produit à base de caoutchouc, du type comportant au moins une zone tampon prévue pour piéger l'oxygène extérieur audit produit en vue de protéger de l'oxydation au moins une zone sensible dudit produit, ladite ou chaque zone tampon contenant une composition à base d'au moins un élastomère qui comprend au moins un sel de fer (III) prévu pour activer l'oxydation dans ladite composition, **caractérisé en ce que** ledit sel appartient au groupe constitué par l'acétylacétonate de fer (III) et par les sels de fer (III) d'acides carboxyliques répondant à la formule:
Fe(CₙH₂ₙO₂)₃ où n est compris entre 6 et 23.

2. Produit à base de caoutchouc selon la revendication 1, **caractérisé en ce que** ledit sel appartient au groupe constitué par l'acétylacétonate de fer (III) et par les sels de fer (III) d'acides gras répondant à la formule:
Fe(CₙH₂ₙO₂)₃ où n est compris entre 13 et 23.

3. Produit à base de caoutchouc selon la revendication 1, **caractérisé en ce que** ledit sel est l'acétylacétonate de fer (III).

4. Produit à base de caoutchouc selon la revendication 1, **caractérisé en ce que** ledit sel est l'hexanoate de fer (III).

5. Produit à base de caoutchouc selon la revendication 1, **caractérisé en ce que** ledit sel est le 2-éthylhexanoate de fer (III).

6. Produit à base de caoutchouc selon la revendication 1, **caractérisé en ce que** ledit sel est le laurate de fer (III).

7. Produit à base de caoutchouc selon la revendication 2, **caractérisé en ce que** ledit sel est le stéarate de fer (III).

8. Produit à base de caoutchouc selon la revendication 2, **caractérisé en ce que** ledit sel est le palmitate de fer (III).

9. Produit à base de caoutchouc selon une des revendications précédentes, **caractérisé en ce que** la quantité dudit sel de fer (III) dans ladite composition est comprise entre 0,01 et 0,02 pce d'équivalent fer.

10. Enveloppe de pneumatique, **caractérisée en ce qu'**elle est constituée d'un produit selon une des revendications précédentes.

11. Enveloppe de pneumatique selon la revendication 10, ladite enveloppe étant du type comportant une gomme intérieure, une nappe carcasse s'étendant de tringle à tringle, des nappes sommet, des flancs se terminant par des bourrelets comportant au moins une tringle et une bande de roulement, **caractérisée en ce que** ladite ou chaque zone tampon contenant ladite composition occupe au moins l'une des positions suivantes:
radialement à l'intérieur de ladite gomme intérieure, entre ladite gomme intérieure et ladite nappe carcasse, entre ladite nappe carcasse et lesdites nappes sommet, entre lesdites nappes sommet et ladite bande de roulement, entre ladite nappe carcasse et lesdits flancs, dans ou à l'extérieur desdits flancs, dans ou à l'extérieur de ladite bande de roulement.

12. Procédé d'obtention d'un produit à base de caoutchouc selon une des revendications 1 à 9, **caractérisé en ce qu'**il consiste à incorporer par travail mécanique ledit sel de fer (III) à l'élastomère ou aux élastomères que comprend ladite composition, pour l'obtention de ladite ou de chaque zone tampon.

13. Procédé d'obtention d'un produit à base de caoutchouc selon la revendication 12, ledit produit comportant une charge renforçante, **caractérisé en ce qu'**il consiste à incorporer audit ou auxdits élastomères ledit sel de fer (III) en même temps qu'une charge prévue pour renforcer ladite composition.

14. Procédé pour réduire la résistance au roulement d'une enveloppe de pneumatique; **caractérisé en ce qu'**il consiste à incorporer par travail mécanique, à un ou à des élastomères constituant ladite enveloppe, un sel de fer (III) tel que défini à l'une des revendications 1 à 9.

## Patentansprüche

1. Erzeugnis auf Kautschukbasis vom Typ der Erzeugnisse, die mindestens einen Pufferbereich aufweisen, der dafür vorgesehen ist, den von außen stammenden Sauerstoff in dem Erzeugnis einzufangen, um mindestens einen empfindlichen Bereich dieses Erzeugnisses vor Oxidation zu schützen, wobei der Pufferbereich oder jeder Pufferbereich eine Zusammensetzung auf der Basis mindestens eines Elastomers enthält, die mindestens ein Eisen(III)-salz umfaßt, das dafür vorgesehen ist, die Oxidation in dieser Zusammensetzung zu aktivieren, **dadurch gekennzeichnet, dass** das Salz zu der Gruppe gehört, die aus Eisen(III)-acetylacetonat und den Eisen(III)-salzen von Carbonsäuren, die der Formel Fe(CₙH₂ₙO₂)₃ entsprechen, worin n im Bereich von 6 bis 23 liegt, besteht.

2. Erzeugnis auf Kautschukbasis nach Anspruch 1, **dadurch gekennzeichnet, dass** das Salz zu der Gruppe gehört, die aus Eisen(III)-acetylacetonat und den Eisen(III)-salzen von Fettsäuren , die der Formel Fe(CₙH₂ₙO₂)₃ entsprechen, worin n im Bereich von 13 bis 23 liegt, besteht.

3. Erzeugnis auf Kautschukbasis nach Anspruch 1, **dadurch gekennzeichnet, dass** es sich bei dem Salz um Eisen(III)-acetylacetonat handelt.

4. Erzeugnis auf Kautschukbasis nach Anspruch 1, **dadurch gekennzeichnet, dass** es sich bei dem Salz um Eisen(III)-hexanoat handelt.

5. Erzeugnis auf Kautschukbasis nach Anspruch 1, **dadurch gekennzeichnet, dass** es sich bei dem Salz um Eisen(III)-2-ethylhexanoat handelt.

6. Erzeugnis auf Kautschukbasis nach Anspruch 1, **dadurch gekennzeichnet, dass** es sich bei dem Salz um Eisen(III)-laurat handelt.

7. Erzeugnis auf Kautschukbasis nach Anspruch 1, **dadurch gekennzeichnet, dass** es sich bei dem Salz um Eisen(III)-stearat handelt.

8. Erzeugnis auf Kautschukbasis nach Anspruch 1, **dadurch gekennzeichnet, dass** es sich bei dem Salz um Eisen(III)-palmitat handelt.

9. Erzeugnis auf Kautschukbasis nach einem der vorhergehenden Ansprüche, **dadurch gekennzeichnet, dass** die Menge des Eisen(III)-salzes in der Zusammensetzung im Bereich von 0,01 bis 0,02 pce an Eisenäquivalent liegt.

10. Luftreifen, **dadurch gekennzeichnet, dass** er aus einem Erzeugnis nach einem der vorhergehenden Ansprüche besteht.

11. Luftreifen nach Anspruch 10, wobei der Luftreifen ein Luftreifen des Typs ist, der einen Innengummi, eine Karkasslage, die sich von Wulstkern zu Wulstkern erstreckt, Scheitellagen, Seitenwände, die durch Wülste, die mindestens einen Wulstkern aufweisen, und einen Laufstreifen begrenzt werden, aufweist, **dadurch gekennzeichnet, dass** die Pufferschicht oder jede Pufferschicht, die diese Zusammensetzung enthält, mindestens eine der folgenden Positionen einnimmt:
radial auf der Innenseite des Innengummis, zwischen dem Innengummi und der Karkasslage, zwischen der Karkasslage und den Scheitellagen, zwischen den Scheitellagen und dem Laufstreifen, zwischen der Karkasslage und den Seitenwänden, in den Seitenwänden oder auf der Außenseite der Seitenwände, in dem Laufstreifen oder auf der Außenseite des Laufstreifens.

12. Verfahren zur Herstellung eines Erzeugnisses auf Kautschukbasis nach einem der Ansprüche 1 bis 9, **dadurch gekennzeichnet, dass** es darin besteht, das Eisen(III)-salz durch mechanische Arbeit in das Elastomer oder in die Elastomere, das/die in dieser Zusammensetzung enthalten ist, einzuarbeiten, um den Pufferbereich oder jeden Pufferbereich herzustellen.

13. Verfahren zur Herstellung eines Erzeugnisses auf Kautschukbasis nach Anspruch 12, wobei das Erzeugnis einen verstärkenden Füllstoff enthält, **dadurch gekennzeichnet, dass** es darin besteht, das Eisen(III)-salz gleichzeitig mit einem Füllstoff, der dafür vorgesehen ist, die Zusammensetzung zu verstärken, in dieses Elastomer oder in diese Elastomere einzuarbeiten.

14. Verfahren zur Verringerung des Rollwiderstands eines Luftreifens, **dadurch gekennzeichnet, dass** es darin besteht, ein Eisen(III)-salz, das wie in einem der Ansprüche 1 bis 9 definiert ist, in ein Elastomer oder in die Elastomere, aus dem/denen der Luftreifen besteht, durch mechanische Arbeit einzuarbeiten.

## Claims

1. A rubber-based product, of the type comprising at least one buffer zone provided for trapping the oxygen external to said product in order to protect from oxidation at least one sensitive zone of said product, said or each buffer zone containing a composition based on at least one elastomer which comprises at least one iron (III) salt provided to activate the oxidation in said composition, **characterised in that** said salt belongs to the group consisting of iron (III) acetylacetonate and of iron (III) salts of carboxylic acids of the formula:
Fe(CₙH₂ₙO₂)₃ where n is between 6 and 23.

2. A rubber-based product according to Claim 1, **characterised in that** said salt belongs to the group consisting of iron (III) acetylacetonate and iron (III) fatty acid salts of the formula:
Fe(CₙH₂ₙO₂)₃ where n is between 13 and 23.

3. A rubber-based product according to Claim 1, **characterised in that** said salt is iron (III) acetylacetonate.

4. A rubber-based product according to Claim 1, **characterised in that** said salt is iron (III) hexanoate.

5. A rubber-based product according to Claim 1, **characterised in that** said salt is iron (III) 2-ethylhexanoate.

6. A rubber-based product according to Claim 1, **characterised in that** said salt is iron (III) laurate.

7. A rubber-based product according to Claim 2, **characterised in that** said salt is iron (III) stearate.

8. A rubber-based product according to Claim 2, **characterised in that** said salt is iron (III) palmitate.

9. A rubber-based product according to one of the preceding claims, **characterised in that** the quantity of said iron (III) salt in said composition is of between 0.01 and 0.02 phr of iron equivalent.

10. A tyre, **characterised in that** it is formed of a product according to one of the preceding claims.

11. A tyre according to Claim 10, said tyre being of the type comprising an internal rubber, a carcass ply extending from bead wire to bead wire, crown plies, sidewalls ending in beads comprising at least one bead wire and a tread, **characterised in that** said or each buffer zone containing said composition occupies at least one of the following positions:
radially to the inside of said internal rubber, between said internal rubber and said carcass ply, between said carcass ply and said crown plies, between said crown plies and said tread, between said carcass ply and said sidewalls, in or on the outside of said sidewalls, in or on the outside of said tread.

12. A process for obtaining a rubber-based product according to one of Claims 1 to 9, **characterised in that** it consists of incorporating, by mechanical working, said iron (III) salt in the elastomer or elastomers which said composition comprises, for obtaining said or each buffer zone.

13. A process for obtaining a rubber-based product according to Claim 12, said product comprising a reinforcing filler, **characterised in that** it consists of incorporating in said elastomer(s) said iron (III) salt at the same time as a filler provided for reinforcing said composition.

14. A process for reducing the rolling resistance of a tyre, **characterised in that** it consists of incorporating, by mechanical working, in one or more elastomer(s) constituting said tyre, an iron (III) salt as defined in one of Claims 1 to 9.
